# FASCICULE DE BREVET EUROPEEN

(11) **EP 0 837 080 B1**
(45) Date de publication et mention de la délivrance du brevet: **12.12.2001**
(21) Numéro de dépôt: 97402332.7
(22) Date de dépôt: 03.10.1997
(51) Int. Cl.: C08F 255/00, C08F 291/00, C08K 5/00, C08K 5/3435

(54) **Polymères greffés à viscosité côntrolée**
Pfropfpolymere kontrollierter Viskosität
Graft polymers with controlled viscosity

(30) Priorité: 16.10.1996 FR 9612624
(43) Date de publication de la demande: 22.04.1998
(73) Titulaire: Atofina, 92800 Puteaux (FR)
(72) Inventeur: Robert, Patrice M., 27170 Beaumont Le Roger (FR)
(74) Mandataire: Neel, Henry

(56) Documents cités:
- EP-A- 0 726 280
- EP-A- 0 726 289
- DD-A- 294 493
- US-A- 5 412 047

## Description

La présente invention concerne des polymères greffés à viscosité contrôlée et plus particulièrement ceux greffés par des monomères fonctionnels tels que par exemple l'anhydride maléique. Ils sont utiles comme compatibilisants dans des mélanges de polymères ou comme liants de coextrusion.

L'invention concerne aussi ces alliages et les multicouches comprenant ces liants de coextrusion.

L'invention concerne aussi un procédé pour préparer ces polymères greffés.

Le greffage radicalaire de monomères fonctionnels sur les polyoléfines se fait soit à l'état fondu, soit en solution en utilisant des initiateurs de radicaux comme les peroxydes, soit à l'état solide par irradiation. Sous l'action des radicaux, des réactions secondaires se produisent en même temps que la réaction de greffage. Elles conduisent à une augmentation de la masse moléculaire dans le cas où le polymère à greffer est du polyéthylène, ou à sa diminution dans la cas où c'est du polypropylène. Si la quantité de radicaux nécessaire à la réaction de greffage est importante, l'évolution de la masse moléculaire de la polyoléfine conduit à une modification importante de sa viscosité à l'état fondu. Ces phénomènes réduisent la quantité de fonctions réactives incorporables sur la polyoléfine par greffage radicalaire de monomères fonctionnels.

La demanderesse a découvert l'intérêt de l'utilisation de radicaux libres stables lors du greffage de polyoléfines par un monomère fonctionnel. Elle permet de limiter les réactions de fragmentation dans le cas du polypropylène et les réactions de réticulation dans le cas du polyéthylène. Dans les deux cas, cela conduit à une amélioration de la mise en oeuvre, par exemple par extrusion, des produits greffés.

Pour un même taux de greffage, le PP (polypropylène) greffé en présence de radicaux stable est plus visqueux, il a donc une meilleure tenue à l'état fondu et sa granulation est facilitée.

Le polyéthylène greffé en présence de radicaux stable est moins visqueux. lors de son extrusion, la pression en tête d'extrudeuse est diminuée, sa mise en oeuvre est facilitée, même pour des taux de greffage élevés.

L'art antérieur US 5 344 888 a décrit le greffage des polypropylènes homo et copolymères par l'anhydride maléique en présence d'initiateurs peroxydes et d'un coagent pouvant être par exemple le maléate de diallyle, le succinate de diallyleou le cyanurate de triallyle. Ce ne sont pas des radicaux libres stables ni des générateurs de tels radicaux. Les exemples montrent qu'on peut obtenir du polypropylène contenant jusqu'à 2 % en poids ou plus d'anhydride maleique greffé.

Cependant, ce procédé bien qu'il permette de greffer d'importantes quantités d'anhydride maléique ne permet pas d'éviter la dégradation de la viscosité.

L'art antérieur EP 726 289 décrit des généralités sur la stabilisation des polymères par des radicaux libres stables par exemple pendant leur greffage. Les exemples montrent le greffage de copolymère dibloc styrène butadiène par l'acide mercaptopropionique ou l'acide méthacrylique.

Le greffage en l'absence de radicaux libres stables conduit à un polymère contenant 2,8 % de greffons mais qui est réticulé par rapport au polymère de départ tandis que le greffage en présence de radicaux libres stables évite la réticulation du polymère de départ mais le taux de greffons baisse à 2,4 %.

Cet art antérieur montre soit la protection des polymères styréniques ou du PMMA par des radicaux stables (TEMPO) pour éviter leur dépolymérisation pendant leur fusion, soit le greffage d'acides sur des copolymères blocs styréniques. Les quantités de TEMPO (2,2,6,6-tetramethyl-1-pyreridiniloxy) sont de 10 millimoles par kg de polymère sur lequel on greffe (soit 0,15 %). La description cite une fourchette de 0,05 à 0,5 % de radicaux stables par rapport au poids du polymère à greffer et du greffon. Ces quantités correspondent à une fourchette de 3,5 à 33 millimoles de TEMPO par kg de l'ensemble polymère à greffer et du greffon.

Il n'est pas exemplifié le greffage des polyethylènes et des polypropylènes par des monomères fonctionnels et en particulier les anhydrides d'acides carboxyliques insaturés.

Le but de la présente invention est de trouver un compromis entre la modification de la viscosité pendant le greffage du monomère fonctionnel et la quantité de greffons. Par exemple, dans le cas du polypropylène, on a découvert qu'on pouvait greffer d'importantes quantités de monomère fonctionnel en conservant une viscosité acceptable pour récupérer et granuler le polypropylène ainsi greffé et surtout pouvoir l'utiliser ultérieurement.

La présente invention concerne un procédé de préparation de polymères thermoplastiques greffés dans lequel on greffe au moins un polymère thermoplastique (A). Choisi parmi les polyéthylènes homo ou copolymères, les polypropylènes homo ou copolymères, les polybutènes homo ou copolymères, les elastomères EPR et les élastomères EPDM. par un monomère fonctionnel en présence d'une substance qui inhibe ou réduit la réticulation ou la dépolymérisation de (A).

Plusieurs de ces polymères greffés sont nouveaux en eux-mêmes, l'invention concerne aussi ces produits.

L'invention concerne aussi des mélanges de polymères comprenant les produits obtenus par le procédé de l'invention. L'invention concerne aussi des liants de coextrusion comprenant les polymères greffés obtenus par le procédé de l'invention. Elle concerne aussi les structures multicouches comprenant les liants précédents.

Le polymère (A) peut être par exemple un polyéthylène homo ou copolymère, un polypropylène homo ou copolymère, un polybutène homo ou copolymère.

S'agissant des copolymères de l'éthylène, à titre de comonomères, on peut citer :
- les alpha-oléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1―eicocène, 1-dococène, 1-tétracocène, 1-hexacocène, 1―octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.
- (A) peut comprendre plusieurs comonomères.

Selon une forme particulière de l'invention le polymère (A), qui peut être un mélange de plusieurs polymères, comprend au moins 50% et de préférence 75% (en moles) d'éthylène. La densité de (A) peut être comprise entre 0,86 et 0,98 g/cm³. Le MFI (indice de viscosité à 190°C, 2,16 kg) est compris avantageusement entre 1 et 1000 g/10 min.

A titre d'exemple de polymères (A) on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10% et de préférence 0,2 à 6% en poids.
- les copolymères éthylène-acétate de vinyle-anhydride maléique obtenus par copolymérisation des trois monomères, les proportions étant les mêmes que dans le copolymère précédent.

(A) peut être aussi polypropylène homo- ou copolymère. A titre de comonomères, on peut citer :
- les alpha oléfines, avantageusement celles ayant de 3 à 30 atomes de carbone. Des exemples de telles alphaoléfines sont les mêmes que celles citées plus haut sauf à remplacer le propylène par l'éthylène dans la liste
- les diènes

(A) peut être aussi un copolymère à blocs polypropylène.

A titre d'exemple de polymère (A) on peut citer
- le polypropylène
- les mélanges de polypropylène et d'EPDM ou d'EPR.

Selon une forme particulière de l'invention, le polymère (A), qui peut être un mélange de plusieurs polymères, comprend au moins 50% et de préférence 75% en moles de propylène.

(A) peut être aussi le poly (1-butène) ou les copolymères du 1-butène avec l'éthylène ou une autre alpha oléfine ayant de 3 à 10 carbones, sauf le propylène déjà cité ci-dessus.

Le polymère thermoplastique (A) est greffé par un monomère fonctionnel. A titre d'exemples de fonctions greffées on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4―méthyl-cyclohex-4-ène-1,2-dicarboxylique, bicyclo(2,2,1)hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4―méthylènecyclohex-4-ène-1,2-dicarboxylique, bicyclo(2,2,1)hept-5-ène-2,3-dicarboxylique, et x―méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N―monoéthylamide maléique, N,N-diéthylamide maléique, N―monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide; et des sels métalliques d'acides carboxyliques insaturés tels que acrylate de sodium, méthacrylate de sodium, acrylate de potassium, et méthacrylate de potassium. On utilise avantageusement l'anhydride maléique.

Divers procédés connus peuvent être utilisés pour greffer un monomère fonctionnel sur le polymère thermoplastique (A).

Par exemple, ceci peut être réalisé en chauffant le polymère (A) à température élevée, environ 150° à environ 300°C, en présence ou en l'absence d'un solvant avec ou sans générateurs de radicaux libres qu'on appelle aussi initiateurs. Des solvants appropriés qui peuvent être utilisés dans cette réaction sont le benzène, toluène, xylène, chlorobenzène, cumène, etc. Des initiateurs de radicaux appropriés qui peuvent être utilisés sont des peroxydes organiques tels que par exemple le t-butyl-hydroperoxyde, cumène―hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

D'autres initiateurs peuvent être utilisés, tels que les composés azo. On peut citer par exemple le :
2,2'-azobis (-2,4 diméthylvaleronitrile)
le 2,2'-azo (2-méthyl-propane)(2,4 diméthyl-4-methoxyvaleronitrile),
le 2,2' -azobis (isobutyronitrile),
le 2,2' -azo (2-méthylpropane)(2,4-diméthylvaleronitrile),
le 2,2' -azo (2-méthylpropane)(2-méthylpropionitrile),
le 2;2' -azo (2-méthylpropane)(2-méthylbutyronitrile),
le 2,1-azo (2-méthylpropane)(1-cyanocyclohexane),
le 2,1-azo (2-méthylbutane)(1-cyanocyclohexane).

A titre d'exemple de substance qui inhibe ou réduit la réticulation ou la dépolymérisation du polymère thermoplastique (A), on peut citer les radicaux libres stables.

Il ne faut pas confondre ces radicaux libres stables avec les radicaux précédents (issus des peroxydes ou des azo) dont la durée de vie est éphémère (quelques millisecondes).

A titre d'illustration de radicaux libres stables utilisables selon la présente invention, on peut citer les radicaux nitroxydes stables, qui comprennent le groupement =N-O^{•}. Selon la présente invention, le radical nitroxyde stable peut être choisi parmi les composés représentés par les formules suivantes : 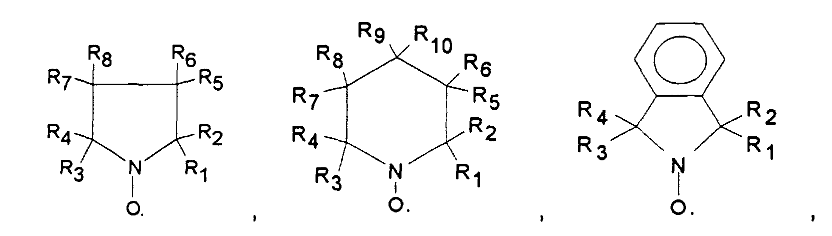 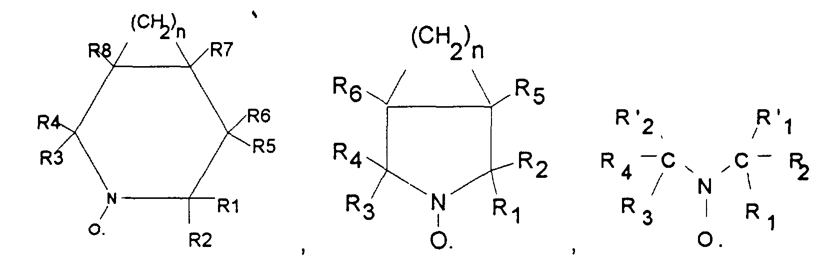 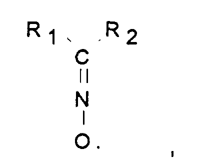 dans lesquelles R1, R2, R3, R4, R'1 et R'2, identiques ou différents, représentent un atome d'halogène tel que le chlore ou le brome, un groupement hydrocarboné linéaire, ramifié ou cyclique, saturé ou insaturé ayant un nombre de carbone allant de 1 à 10 tel qu'un radical alkyle, cycloalkyle ou phényle, ou un groupement ester-COOR ou un groupement alcoxyle -OR, ou un groupement phosphate -P(O)(OR)₂ dans lesquelles R est un radical aliphatique saturé ayant un nombre de carbone allant de 1 à 3 ; et dans lesquelles R5, R6, R7, R8, R9 et R10, identiques ou différents, peuvent avoir la même signification que R1, R2, R3, R4, R'1 et R'2 ou bien représentent un atome d'hydrogène, un groupement hydroxyle- OH ou un groupement acide tel que -COOH, -P(O)(OH)₂ ou -SO₃H.

A titre d'illustration de tels nitroxydes on peut citer :
- le 2,2,5,5-tétraméthyl-1-pyrrolidinyloxy (PROXYL),
- le 2,2,6,6-tétraméthyl-1-pipéridinyloxy, généralement commercialisé sous la dénomination TEMPO,
- le N-tertiobytyl-1-phényl-2 méthyl propyl nitroxyde,
- le N-tertiobutyl-1-(2-naphtyl)-2-méthyl propyl nitroxyde,
- le N-tertiobutyl-1-diéthylphosphono-2,2-diméthyl propyl nitroxyde,
- le N-tertiobytyl-1-dibenzylphosphono-2,2-diméthyl propyl nitroxyde,
- le N-phényl-1-diéthyl phosphono-2,2-diméthyl propyl nitroxyde,
- le N-phényl-1-diéthyl phosphono-1-méthyl éthyl nitroxyde,
- le N-(-1-phényl2-méthylpropyl)-1 diéthylphosphono-1-méthyl éthylnitroxyde
On utilisera de préférence le TEMPO.

La quantité de monomère fonctionnel qu'on introduit dans le procédé peut être comprise entre 0,05 et 15 % en poids du polymère (A) et de péférence 0,5 à 10 % . La quantité d'initiateur radicalaire éventuel peut être comprise entre 0,3 et 100 millimole par kg de polymère (A) et de préférence 2 à 25.

La quantité de radical libre stable peut être comprise entre 0,05 et 200 millimole par kg de polymère (A) avantageusement de 0,1 à 10 et de préférence de 0,3 à 5.

On opère de préférence en extrudeuse sans solvant, l'initiateur radicalaire et le monomère fonctionnel sont dispersés sur une poudre du polymère (A) puis introduits dans la première zone de l'extrudeuse à l'aide par exemple d'une trémie puis ils se mélangent avec le polymère (A) qu'on doit greffer.

Certains des produits obtenus sont nouveaux, en particulier des polypropylènes et des polyéthylènes greffés qu'on va décrire ci-dessous.

La présente invention concerne aussi des polypropylènes greffés ayant un MFi compris entre 5 et 100 (mesuré à 190° C/325 g) et contenant en poids 0,5 à 3 % de monomère fonctionnel, de préférence de l'anhydride maléique.

Le terme polypropylène doit être pris au sens expliqué plus haut dans la définition de (A).

La présente invention concerne aussi des polyéthylènes greffés ayant un MFi compris entre 0,1 et 100, avantageusement entre 0,1 et 30, (mesuré à 190° C/2,16 kg) et contenant en poids 0,5 à 3 % de monomère fonctionnel, de préférence de l'anhydride maléique. Le terme polyéthylène doit être pris au sens expliqué plus haut dans la défintion de (A). De préférence, le polyéthylène est polyéthylène haute densité, c'est-à-dire une masse volumique en général supérieure à 0,940.

Les produits obtenus par le procédé de l'invention peuvent éventuellement être dilués dans des polymères pouvant être choisis parmi les polymères thermoplastiques (A).

Les produits de l'invention peuvent en outre contenir les additifs habituels tels que des antioxydants, des absorbeurs d'U.V., des agents antistatiques, des pigments, des colorants, des charges etc...

Ces produits sont utiles comme liants de coextrusion.

La présente invention concerne aussi une structure multicouche comprenant une couche comprenant le liant de coextrusion défini ci-dessus, et directement attachée à celle-ci une couche (E) de résine polaire azotée ou oxygénée telle qu'une couche d'une résine polyamide, d'un copolymère saponifié d'éthylène et d'acétate de vinyle (EVOH) ou d'une résine polyester, ou bien une couche métallique.

L'invention concerne aussi une structure comprenant la structure précédente et directement attachée à celle-ci, du côté du liant, soit une couche (F) de polyoléfine, soit une couche d'une résine choisie parmi les résines de la couche (E) soit encore une couche métallique.

Ces structures sont utiles pour fabriquer des emballages souples ou rigides tels que des sachets, des bouteilles pour des produits alimentaires. On peut fabriquer ces emballages par coextrusion, laminage, coextrusion soufflage.

La structure multicouche de la présente invention est constituée par la couche comprenant le liant précédent, et par une couche (E) de résine polaire oxygénée ou azotée, ou une couche métallique.

Des exemples de résines polaires préférées dans la couche autre que le liant sont les résines de polyamide, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate et des mélanges de ces résines.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La couche de résine polaire oxygénée ou azotée (E) peut contenir également des additifs connus en quantité classique.

L'invention concerne aussi une structure comprenant respectivement une couche (F) de polyoléfine une couche du liant de l'invention et soit une couche (E) de résine polaire azotée ou oxygénée soit une couche métallique.

### Exemples

Produits utilisés :
- PEHD 2250 MN 53 : Polyéthylène haute densité de MFi = 25 et de densité = 0,953 g/cm³
- PP 3060 MN 5 : Polypropylène copolymère à blocs propylène/éthylène, de denstié = 0,902 g/cm³ et de MFi = 6 (230° C / 2,16 kg)
- Initiateur utilisé : peroxyde de 2,5 diméthyl-2,5 (ditertiobutyl)hexane (LUPEROX 101) (DHBP)
- Monomère fonctionnel : anhydride maléique
- Radical nitroxyde stable : le 2,2,6,6-tétraméthyl-1-pipéridinyloxy commercialisé sous la dénomination TEMPO.

### Exemple 1

Cet exemple décrit le greffage de polypropylène par de l'anhydride maléique en présence de peroxyde. On utilise une extrudeuse bi-vis corotative de type WERNER 30 dans les conditions suivantes :

L'extrudeuse se décompose en 8 zones Z1 à Z8. Les températures dans les zones sont comprises entre 150 et 280° C.

L'anhydride maléique et le peroxyde dispersés sur poudre de polymère, et le PP 3050 MN 5 à greffer sont introduits par une trémie en zone Z1.

On introduit 1,5 % en poids d'anhydride maléique, et 17,2 millimole/kg de DHBP.

Les températures dans les zones Z3, Z4 et Z5 sont au moins suffisantes pour que 99,9 % de l'initiateur radicalaire réagisse avant la zone Z6. L'initiateur utilisé est le peroxyde de 2,5 diméthyl2,5 (ditertiobutyl) hexane (LUPEROX 101) (DHBP).

Les résidus de l'initiateur radicalaire, le solvant et l'anhydride maléique non réagi sont dégazés sous vide en zone Z6.

Le débit d'extrusion en sortie de la zone Z8 varie suivant la vitesse de vis imposée entre 10 et 15 kg/h.

Le jonc est granulé après refroidissement.

Le produits est caractérisé par l'indice de fluidité (MFi sous 2.16 kg à 190° C exprimé en dg/mn) et la teneur en anhydride maléique (AM) greffée (exprimée en pourcents massiques).

### Exemple 2

Identique à l'exemple 1 mais on introduit en continu une quantité de TEMPO égale à 3,2 millimole/kg.

Le TEMPO en solution dans un solvant approprié, est introduit par une pompe doseuse en zone Z1.

### Exemple 3

Identique à l'exemple 1 mais on introduit en continu une quantité de TEMPO égale à 4,8 millimole/kg.

Le TEMPO en solution dans un solvant approprié, est introduit par une pompe doseuse en zone Z1.

### Exemple 4

Cet exemple décrit le greffage de polyéthylène haute densité par de l'anhydride maléique en présence de peroxyde. On utilise une extrudeuse bi-vis corotative de type WERNER 30 dans les conditions suivantes :

L'extrudeuse se décompose en 8 zones Z1 à Z8. Les températures dans les zones sont comprise entre 150 et 280° C.

L'anhydride maléique et le peroxyde dispersés sur poudre de polymère, et le PEHD 2250 MN 53 à greffer sont introduits par une trémie en zone Z1.

On introduit 2 % en poids d'anhydride maléique et 4,8 millimole/kg de DHPB.

Les températures dans les zones Z3, Z4 et Z5 sont au moins suffisantes pour que 99,9 % de l'initiateur radicalaire réagisse avant la zone Z6. L'initiateur utilisé est le peroxyde de 2,5 diméthyl 2,5 (ditertiobutyl) hexane (LUPEROX 101)(DHBP).

Les résidus de l'initiateur radicalaire, le solvant et l'anhydride maléique non réagi sont dégazés sous vide en zone Z6.

Le débit d'extrusion en sortie de la zone Z9 varie suivant la vitesse de vis imposée entre 10 et 15 kg/h.

Le jonc est granulé après refroidissement.

### Exemple 5

Identique à l'exemple 4 mais on introduit en continu une quantité de TEMPO égale à 0,38 millimole/kg.

Le TEMPO en solution dans un solvant approprié, est introduit par une pompe doseuse en zone Z1.

### Exemple 6

Identique à l'exemple 4 mais on introduit en continu une quantité de TEMPO égale à 0,80 millimole/kg.

Le TEMPO en solution dans un solvant approprié, est introduit par une pompe doseuse en zone Z1.

### Exemple 7

Identique à l'exemple 4 mais on introduit en continu une quantité de TEMPO égale à 1,6 millimole/kg.

Le TEMPO en solution dansun solvant approprié, est introduit par une pompe doseuse en zone Z1.

### Exemple 8

Identique à l'exemple 4 mais on introduit en continu une quantité de TEMPO égale à 3,2 millimole/kg.

Le TEMPO en solution dans un solvant approprié, est introduit par une pompe doseuse en zone Z1.

### Exemple 9

Identique à l'exemple 4, mais la teneur en anhydride maléique introduite est égale à 4 % et celle en DHBP égale à 9,6 millimole/kg.

### Exemple 10

Identique à l'exemple 9 mais on introduit en continu une quantité de TEMPO égale à 3,2 millimole/kg.

Le TEMPO en solution dans un solvant approprié, est introduit par une pompe doseuse en zone Z1.

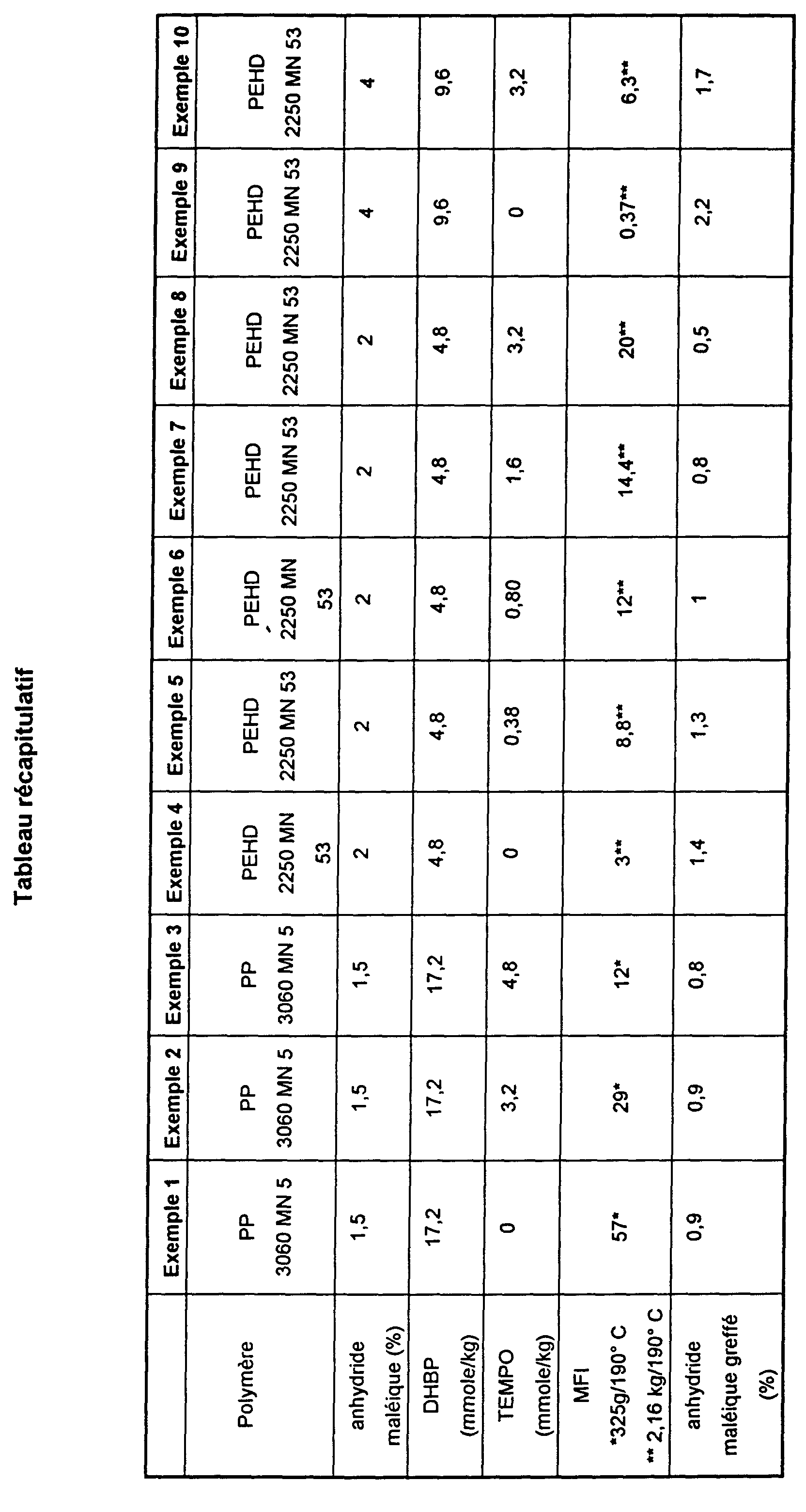

## Revendications

1. Procédé de préparation de polymères thermoplastiques greffés dans lequel on greffe au moins un polymère thermoplastique (A) choisi parmi les polyétylènes homo ou copolymères, les polypropylènes homo ou copolymères, les polybutènes homo ou copolymères, les élastomères EPR et les élastomères EPDM par un monomère fonctionnel en présence d'une substance qui inhibe ou réduit la réticulation ou la dépolymérisation de (A).

2. Procédé selon la revendication 1 dans lequel la substance qui inhibe ou réduit la réticulation ou la dépolymérisation de (A) est un radical nitroxyde stable comprenant le groupement = N-O•.

3. Procédé selon la revendication 1 ou 2 dans lequel le polymère (A) peut être un mélange de plusieurs polymères et comprend au moins 50 % et de préférence 75 % (en moles) d'éthylène.

4. Procédé selon la revendication 3 dans lequel le polymère (A) est un mélange de polyéthylène avec un EPR ou un EPDM.

5. Procédé selon la revendication 1 ou 2 dans lequel le polymère (A) peut être un mélange de polymères et comprend au moins 50 % et de préférence 75 % (en moles) de propylène.

6. Procédé selon l'une quelconque des revendications précédentes dans lequel le monomère fonctionnel est l'anhydride maléique.

7. Procédé selon l'une quelconque des revendications précédentes dans lequel la quantité de radical nitroxyde stable est comprise entre 0,05 et 200 millimole par kg de polymère (A) et de préférence comprise entre 0,1 et 10.

8. Polypropylène greffé ayant un MFi compris entre 5 et 100 (mesuré à 190° C / 325 g) et contenant en poids 0,5 à 3 % de monomère fonctionnel.

9. Polyéthylène greffé ayant un MFi compris entre 0,1 et 100 (mesuré à 190° C / 2,16 kg) et contenant en poids 0,5 à 3 % de monomère fonctionnel.

10. Polymères greffés selon la revendication 8 ou 9 dans lesquels le monomère fonctionnel greffé est de l'anhydride maléique.

11. Mélanges de polymères comprenant les polymères des revendications 8 à 10 ou les polymères obtenus par le procédé des revendications 1 à 7.

12. Liants de coextrusion comprenant les polymères des revendications 8 à 10 ou les polymères obtenus par le procédé des revendications 1 à 7.

13. Structure multicouche comprenant au moins un liant de coextrusion de la revendication 12.

## Patentansprüche

1. Verfahren zur Herstellung von thermoplastischen Pfropfpolymeren, bei dem man mindestens einem thermoplastischen Polymeren (A), das aus dem Polyethylenhomo- oder -copolymeren, den Polypropylenhomo- oder -copolymeren, den Polybutenhomo- oder -copolymeren, den Elastomeren EPR und den Elastomeren EPDM gewählt ist, ein funktionelles Monomeres in Gegenwart eines Stoffes aufpfropft, der die Vernetzung oder die Depolymerisation von (A) hemmt oder verringert.

2. Verfahren nach Anspruch 1, bei dem der Stoff, der die Vernetzung oder die Depolymerisation von (A) hemmt oder verringert, ein stabiles Nitroxidradikal mit der Gruppierung =N-O^{•} ist.

3. Verfahren nach Anspruch 1 oder 2, bei dem das Polymere (A) ein Gemisch aus mehreren Polymeren sein kann und mindestens 50 % und vorzugsweise 75 % (in Molen) Ethylen enthält.

4. Verfahren nach Anspruch 3, bei dem das Polymere (A) ein Gemisch von Polyethylen mit einem EPR oder einem EPDM ist.

5. Verfahren nach Anspruch 1 oder 2, bei dem das Polymere (A) ein Gemisch aus Polymeren sein kann und mindestens 50 % und vorzugsweise 75 % (in Molen) Propylen enthält.

6. Verfahren nach irgendeinem der vorangehenden Ansprüche, bei dem das funktionelle Monomere Maleinsäureanhydrid ist.

7. Verfahren nach irgendeinem der vorangehenden Ansprüche, bei dem die Menge des stabilen Nitroxidradikals zwischen 0,05 und 200 Millimol pro kg des Polymeren (A) und vorzugsweise zwischen 0,1 und 10 liegt.

8. Pfropfpolypropylen, das einen MFI-Wert zwischen 5 und 100 (gemessen bei 190 °C / 325 g) hat und 0,5 bis 3 Gew.-% eines funktionellen Monomeren enthält.

9. Pfropfpolypropylen, das einen MFI-Wert zwischen 0,1 und 100 (gemessen bei 190 °C / 2,16 kg) hat und 0,5 bis 3 Gew.-% eines funktionellen Monomeren enthält.

10. Pfropfpolypropylen nach Anspruch 8 oder 9, bei denen das aufgepfropfte funktionelle Monomere Maleinsäureanhydrid ist.

11. Gemisch aus Polymeren, das die Polymeren der Ansprüche 8 bis 10 oder die mit dem Verfahren nach den Ansprüchen 1 bis 7 erhaltenen Polymeren enthält.

12. Coextrusionsbindemittel, das die Polymeren der Ansprüche 8 bis 10 oder die mit dem Verfahren nach den Ansprüchen 1 bis 7 erhaltenen Polymeren enthält.

13. Mehrlagige Struktur mit mindestens einem Coextrusionsbindemittel nach Anspruch 12.

## Claims

1. Process for the preparation of graft thermoplastic polymers in which at least one thermoplastic polymer (A), chosen from polyethylene homo- or copolymers, polypropylene homo- or copolymers, polybutene homo- or copolymers EPR elastomers and EPDM elastomers, is grafted with a functional monomer in the presence of a substance which inhibits or reduces the crosslinking or the depolymerization of (A).

2. Process according to Claim 1, in which the substance that inhibits or reduces the crosslinking or the depolymerization of (A) is a stable nitroxide radical including the group = N-O·.

3. Process according to Claim 1 or 2, in which the polymer (A) may be a blend of several polymers and comprises at least 50% and preferably 75% (on a molar basis) ethylene.

4. Process according to Claim 3, in which the polymer (A) is a blend of polyethylene with an EPR or an EPDM.

5. Process according to Claim 1 or 2, in which the polymer (A) may be a blend of polymers and comprises at least 50% and preferably 75% (on a molar basis) propylene.

6. Process according to any one of the preceding claims, in which the functional monomer is maleic anhydride.

7. Process according to any one of the preceding claims, in which the quantity of stable nitroxide radical is between 0.05 and 200 millimoles per kg of polymer (A) and preferably between 0.1 and 10.

8. Graft polypropylene which has an MFI of between 5 and 100 (measured at 190°C/325 g) and which contains, by weight, 0.5 to 3 % of functional monomer.

9. Graft polyethylene which has an MFI of between 0.1 and 100 (measured at 190°C/2.16 kg) and which contains, by weight, 0.5 to 3 % of functional monomer.

10. Graft polymers according to Claim 8 or 9, in which the grafted functional monomer is maleic anhydride.

11. Polymer mixtures including the polymers of Claims 8 to 10 or the polymers obtained by the process of Claims 1 to 7.

12. Coextrusion binders including the polymers of Claims 8 to 10 or the polymers obtained by the process of Claims 1 to 7.

13. Multilayer structure including at least one coextrusion binder of Claim 12.
